# EUROPÄISCHE PATENTSCHRIFT

(11) **EP 4 177 493 B1**
(45) Veröffentlichungstag und Bekanntmachung des Hinweises auf die Patenterteilung: **03.12.2025**
(21) Anmeldenummer: 22202350.9
(22) Anmeldetag: 19.10.2022
(51) Int. Cl.: F16D 65/12

(54) **BREMSSCHEIBE, SCHEIBENBREMSE MIT EINER BREMSSCHEIBE UND FAHRZEUG MIT EINER BREMSSCHEIBE**
BRAKE DISC, DISK BRAKE COMPRISING A BRAKE DISC AND VEHICLE COMPRISING A BRAKE DISC
DISQUE DE FREIN, FREIN À DISQUE POURVU D'UN DISQUE DE FREIN ET VÉHICULE DOTÉ D'UN DISQUE DE FREIN

(30) Priorität: 03.11.2021 DE 102021128544
(43) Veröffentlichungstag der Anmeldung: 10.05.2023
(73) Patentinhaber: Kristhäl GmbH, 77709 Wolfach (DE)
(72) Erfinder: Hommel, Günter, 71229 Leonberg (DE)
(74) Vertreter: Westphal, Mussgnug & Partner Patentanwälte mbB

(56) Entgegenhaltungen:
- CN-U- 202 768 693
- DE-U1- 202004 005 284
- DE-U1- 202014 105 414
- JP-A- 2003 278 810
- KR-A- 20160 133 715
- US-A1- 2004 178 029
- US-A1- 2013 284 549

## Beschreibung

Die Erfindung betrifft eine Bremsscheibe, eine Scheibenbremse mit einer Bremsscheibe, ein Fahrzeug mit einer Bremsscheibe sowie ein Verfahren zur Herstellung einer Bremsscheibe.

Scheibenbremsen von Fahrzeugen wie beispielsweise Fahrrädern, Motorrädern oder auch Autos, weisen eine Bremsscheibe auf, an die zur Verringerung der Geschwindigkeit der Fahrzeuge ein Bremselement angepresst wird. Durch die entstehende Reibung erhitzt sich die Bremsscheibe. Dadurch können Schädigungen der Bremsscheibe sowie des Bremselements auftreten, die nachteilig für die Funktion der Scheibenbremse sind. Insbesondere im Zusammenhang mit elektrisch angetriebenen Fahrrädern, die im Vergleich zu herkömmlichen Fahrrädern ein höheres Eigengewicht aufweisen und mit denen zugleich höhere Geschwindigkeiten gefahren werden können, ergeben sich hinsichtlich der Bremsleistung und damit hinsichtlich der Wärmeabfuhr gesteigerte Anforderungen.

Aus der DE 10 2018 121 330 A1 ist eine Bremsscheibe mit einer ersten und einer zweiten Außenscheibe sowie einer Innenscheibe bekannt. Dort wird eine Bremsscheibe vorgeschlagen, die insbesondere zur Kühlung Kammern aufweist, in denen ein Kühlmittel angeordnet ist.

Als weiterer Stand der Technik werden die CN 202 768 693 U, die DE 20 2014 105414 U1, die DE 20 2004 005284 U1, die JP 2003 278810 A, die KR 2016 0133715 A, die US 2013/284549 A1 sowie die US 2004/178029 A1 genannt.

Nachteilig an den aus dem Stand der Technik bekannten Bremsscheiben ist, dass insbesondere bei lang anhaltenden Bremsvorgängen bei hohen Geschwindigkeiten, wie sie beispielsweise bei langen Bergabfahrten auftreten, die in die Bremsscheibe eingetragene Wärme nicht hinreichend schnell abgeführt werden kann. Darüber hinaus weisen die aus dem Stand der Technik bekannten Bremsscheiben den Nachteil auf, dass sie in der Herstellung sehr aufwändig sind.

Der Erfindung liegt daher die Aufgabe zugrunde, eine Bremsscheibe bereitzustellen, die eine besonders effektive Wärmeabfuhr aufweist und außerdem einfach herstellbar ist.

Darüber hinaus liegt der Erfindung die Aufgabe zugrunde, eine Scheibenbremse sowie ein Fahrzeug mit einer derartigen Bremsscheibe bereitzustellen.

Die Aufgabe wird erfindungsgemäß gelöst durch eine Bremsscheibe mit den Merkmalen des Patentanspruchs 1, eine Scheibenbremse nach Anspruch 14 und ein Fahrzeug nach Anspruch 15.

Vorteilhafte Ausgestaltungen und Weiterbildungen der Erfindung sind in den abhängigen Ansprüchen angegeben.

Eine erfindungsgemäße Bremsscheibe für eine Scheibenbremse, vorzugsweise von Fahrrädern, weist eine erste Außenscheibe, eine zweite Außenscheibe, eine Innenscheibe mit einer Mantelfläche und mindestens einen Luftdurchlass auf. Der mindestens eine Luftdurchlass, umfasst einen in der Innenscheibe angeordneten Belüftungskanal mit einem inneren Kanalende und einem äußeren Kanalende, wobei der Belüftungskanal derart angeordnet ist, dass das äußere Kanalende in der Mantelfläche der Innenscheibe angeordnet ist und das innere Kanalende auf einem gedachten ersten Teilkreis der Bremsscheibe angeordnet ist. Als Teilkreis wird hier und im Folgenden vorzugsweise ein Kreis bezeichnet, dessen Durchmesser kleiner ist als ein Außendurchmesser der Bremsscheibe, und der konzentrisch zu der Bremsscheibe angeordnet ist. Darüber hinaus umfasst der mindestens eine Luftdurchlass eine in der ersten Außenscheibe und/oder der zweiten Außenscheibe angeordnete Belüftungsbohrung mit einem Belüftungsbohrungsdurchmesser. Die Innenscheibe ist derart zwischen der ersten Außenscheibe und der zweiten Außenscheibe angeordnet, dass die mindestens eine Belüftungsbohrung mit dem inneren Kanalende in Wirkverbindung steht.

Vorzugsweise steht die mindestens eine Belüftungsbohrung derart in Wirkverbindung mit dem inneren Kanalende, dass Luft vom inneren Kanalende in die Belüftungsbohrung strömen kann. Die mindestens eine Belüftungsbohrung ist vorzugsweise als Durchgangsbohrung ausgebildet. Am äußeren Kanalende einströmende Luft kann damit durch den Belüftungskanal zum inneren Kanalende und über die mindestens eine Belüftungsbohrung wieder ins Freie strömen. Durch den mindestens einen Luftdurchlass kann somit ein Belüftungsstrom durch die Bremsscheibe geleitet werden, der die in der Bremsscheibe vorhandene Wärme abführen kann.

Besonders bevorzugt ist die mindestens eine Belüftungsbohrung auf dem ersten Teilkreis angeordnet, sodass sie bei entsprechender Ausrichtung der Innenscheibe zu der ersten Außenscheibe und/oder der zweiten Außenscheibe mit dem inneren Kanalende zusammenfällt. Die Längsachse der mindestens einen Belüftungsbohrung ist vorzugsweise parallel einer Rotationsachse der Bremsscheibe angeordnet.

Bevorzugt sind die erste Außenscheibe und die zweite Außenscheibe identisch ausgebildet. Besonders bevorzugt sind sie spiegelsymmetrisch zueinander ausgebildet und angeordnet. Dadurch kann dasselbe innere Kanalende mit der mindestens einen Belüftungsbohrung der ersten Außenscheibe und der mindestens einen Belüftungsbohrung der zweiten Außenscheibe in Wirkverbindung stehen. Ein Teil der durch das äußere Kanalende einströmenden Luft kann damit durch die mindestens eine Belüftungsbohrung der ersten Außenscheibe, der andere Teil durch die mindestens eine Belüftungsbohrung der zweiten Außenscheibe ins Freie strömen.

Die Innenscheibe weist vorzugsweise eine Innenscheibenstärke auf, über die sich der mindestens eine Belüftungskanal vollständig erstrecken kann. In Richtung der Rotationsachse kann der mindestens eine Belüftungskanal damit durch die erste Außenscheibe und die zweite Außenscheibe begrenzt werden.

In einer bevorzugten Ausführungsform der Erfindung ist der mindestens eine Belüftungskanal gegenüber der radialen Richtung der Innenscheibe zumindest abschnittsweise geneigt. Die radiale Richtung der Innenscheibe bezieht sich vorzugsweise auf die Rotationsachse der Bremsscheibe. Bevorzugt ist insbesondere der an das äußere Kanalende angrenzende Abschnitt des mindestens einen Belüftungskanals gegenüber der radialen Richtung geneigt. Die Neigung erfolgt vorzugsweise hin einer vorgesehenen Hauptrotationsrichtung der Bremsscheibe. So kann bei Rotation der Bremsscheibe in der vorgesehenen Hauptrotationsrichtung das Einströmen von Luft in den mindestens einen Belüftungskanal durch die Rotationsbewegung aktiv unterstützt werden. Bevorzugt ist der mindestens eine Belüftungskanal linear ausgebildet. Abschnittsweise kann der mindestens eine Belüftungskanal bogenförmig ausgebildet sein.

Das innere Kanalende kann durch eine Kanalendebohrung mit einem Kanalendebohrungsdurchmesser gebildet werden. Dabei kann die Innenscheibe derart zwischen der ersten Außenscheibe und der zweiten Außenscheibe angeordnet sein, dass die mindestens eine Belüftungsbohrung und die Kanalendebohrung konzentrisch angeordnet sind. Dadurch kann die Herstellung des mindestens einen Belüftungskanals sowie die Montage der Bremsscheibe vereinfacht werden und der Strömungswiderstand in dem Luftdurchlass verringert werden. Besonders bevorzugt ist der Durchmesser der mindestens einen Belüftungsbohrung dabei größer als oder gleich groß wie der Kanalendebohrungsdurchmesser ausgebildet.

Der Kanalendebohrungsdurchmesser kann größer als eine Kanalabschnittsbreite eines unmittelbar an die Kanalendebohrung angrenzenden Kanalabschnitts ausgebildet sein. Dadurch kann das innere Kanalende gegenüber dem übrigen Belüftungskanal aufgeweitet sein. so kann insbesondere der Strömungswiderstand am inneren Kanalende verringert und die Herstellung des inneren Kanalendes vereinfacht werden. Vorzugsweise weist der mindestens eine Belüftungskanal im Übrigen eine konstante Kanalbreite auf. In einer alternativen Ausführungsform kann der mindestens eine Belüftungskanal eine variable, insbesondere eine sich zum inneren Kanalende hin verjüngende Kanalbreite aufweisen.

In einer bevorzugten Ausführungsform der Erfindung weist die Bremsscheibe mehrere, vorzugsweise 36, rotatorisch gleichmäßig versetzte Luftdurchlässe auf. "Rotatorisch" bezieht sich hier und im Folgenden vorzugsweise auf die Rotationsachse der Bremsscheibe. Dadurch kann eine gleichmäßige und effektive Kühlung der Bremsscheibe erreicht werden. Außerdem kann eine 36 Luftdurchlässe aufweisende Bremsscheibe ausreichend stabil und unkompliziert in der Herstellung sein.

Die erfindungsgemäße Bremsscheibe weist mindestens einen Lüfterflügel auf, der mit einer Stirnfläche der Bremsscheibe einen Flügelwinkel von kleiner/gleich 90° einschließt. Vorzugsweise steht der mindestens eine Lüfterflügel damit bzgl. der Rotationsachse der Bremsscheibe in axialer Richtung von der Bremsscheibe ab. Bei der Rotation der Bremsscheibe kann der mindestens eine Lüfterflügel dadurch relativ zur umgebenden Luftmasse bewegt werden. Vorzugsweise steht der mindestens eine Lüfterflügel mit der Bremsscheibe in wärmeleitendem Kontakt, sodass dadurch die Wärmeabgabe der Bremsscheibe in die Umgebung unterstützt werden kann. Der mindestens eine Lüfterflügel kann einstückig mit der Innenscheibe oder einer der Außenscheiben verbunden sein. Insbesondere kann er durch ein aus der Innenscheibe oder einer der Außenscheiben herausgebogenes Element gebildet sein.

Erfindungsgemäß ist der mindestens eine Lüfterflügel an der Innenscheibe angeordnet. Dadurch kann der mindestens eine Lüfterflügel aus einem anderen Material als die Außenscheiben gefertigt sein und dennoch durch einfaches Herausbiegen hergestellt werden. Vorzugsweise ist der mindestens eine Lüfterflügel innerhalb des ersten Teilkreises angeordnet, besonders bevorzugt am Innenumfang der Bremsscheibe. Die erste Außenscheibe und/oder die zweite Außenscheibe können eine Aussparung aufweisen, in der der mindestens eine Lüfterflügel angeordnet ist. Damit kann der mindestens eine Lüfterflügel von der Bremsscheibe abstehend ausgebildet sein.

In einer Weiterbildung der Erfindung weist die Bremsscheibe einen ersten Lüfterflügel und einen zweiten Lüfterflügel auf, wobei der erste Lüfterflügel mit der Stirnfläche der Bremsscheibe einen ersten Flügelwinkel einschließt und der zweite Lüfterflügel mit der Stirnfläche der Bremsscheibe einen zweiten Flügelwinkel einschließt, und wobei der zweite Flügelwinkel betragsmäßig kleiner oder gleich dem ersten Flügelwinkel ist.

Bevorzugt sind der erste Lüfterflügel und der zweite Lüfterflügel derart einander gegenüberliegend angeordnet, dass an den zweiten Lüfterflügel anströmende Luft auf den ersten Lüfterflügel gelenkt wird. Dabei ist vorzugsweise der zweite Lüfterflügel in der Hauptrotationsrichtung der Bremsscheibe vor dem ersten Lüfterflügel angeordnet. Der erste Lüfterflügel und der zweite Lüfterflügel können in dieselbe axiale Richtung der Bremsscheibe ausgestellt sein. Insbesondere bei einer Rotation der Bremsscheibe in Hauptrotationrichtung kann an einer Oberseite des zweiten Lüfterflügels anströmende Luft auf eine Unterseite des ersten Lüfterflügels gelenkt werden. Dadurch kann die Kühlung der Bremsscheibe weiter verbessert werden. Als Oberseite wird dabei vorzugsweise die Seite des jeweiligen Lüfterflügels bezeichnet, zu der die Lüfterflügel ausgestellt sind.

In einer Ausführungsform der Erfindung bilden der erste Lüfterflügel und der zweite Lüfterflügel ein Flügelpaar und die Innenscheibe weist mehrere, vorzugsweise sechs, rotatorisch gleichmäßig versetzte Flügelpaare auf. Dadurch kann eine gleichmäßige und effektive Kühlung der Bremsscheibe erreicht werden.

Vorzugsweise ist die Innenscheibe aus einem Kupferwerkstoff, insbesondere aus Kupfer, gefertigt. Aufgrund der hohen Wärmeleitfähigkeit von Kupfer, kann eine derartige Bremsscheibe die eingetragene Wärme besonders schnell abführen. In Kombination mit dem mindestens einen an der Innenscheibe angeordneten Belüftungskanal und/oder dem mindestens einen an der Innenscheibe angeordneten Lüfterflügel kann der wärmeabführende Effekt weiter gesteigert werden.

Die erste Außenscheibe und/oder die zweite Außenscheibe können aus Edelstahl mit einem Ferritanteil ausgebildet sein. Insbesondere der Ferritanteil kann den Reibwert der Bremsscheibe deutlich erhöhen, sodass eine besonders gute Bremswirkung erreicht werden kann.

In einer bevorzugten Ausführungsform der Erfindung weist die Innenscheibe eine Innenscheibenstärke von 0,8 mm bis 1 mm und die erste Außenscheibe und die zweite Außenscheibe jeweils eine Außenscheibenstärke von 0,5 mm bis 0,7 mm auf.

Die Bremsscheibe kann mindestens eine Befestigungsbohrung aufweisen, die auf einem gedachten zweiten Teilkreis der Bremsscheibe angeordnet ist, wobei bevorzugt der Durchmesser des zweiten Teilkreises größer als der Durchmesser des ersten Teilkreises ist. Vorzugsweise ist die mindestens eine Befestigungsbohrung als Durchgangsbohrung durch die Außenscheiben und die Innenscheibe ausgebildet. So können die Außenscheiben und die Innenscheibe mittels der Befestigungsbohrung miteinander verbunden werden. Vorzugsweise weist die Bremsscheibe mehrere Befestigungsbohrungen auf. Jede der Befestigungsbohrungen kann jeweils zwischen zwei Belüftungskanälen angeordnet sein. Eine Bremsscheibe mit 36 Belüftungskanälen weist damit vorzugsweise 36 Befestigungsbohrungen auf. Damit kann eine Geräuschbelästigung durch ein aneinanderschlagen der Außenscheiben und der Innenscheibe vermieden werden.

Die Innenscheibe und die Außenscheiben können kreisringförmig ausgebildet sein und gegenüber einem Lagerelement schwimmend gelagert sein. Damit kann ein Verspannen der Bremsscheibe infolge von Temperaturschwankungen vermieden werden. Vorzugsweise weist die Bremsscheibe sechs Lagerstellen auf, die vorzugsweise am Innenumfang der Bremsscheibe, insbesondere im Wechsel mit den Flügelpaaren angeordnet sind. Besonders bevorzugt sind die Lagerstellen an den Außenscheiben und an der Innenscheiben angeordnet. Das Lagerelement ist vorzugsweise sternförmig ausgebildet.

Eine erfindungsgemäße Scheibenbremse weist die zuvor beschriebene Bremsscheibe auf.

Ein erfindungsgemäßes Fahrzeug, insbesondere ein Fahrrad, weist die zuvor beschriebene Bremsscheibe auf. Dabei ist die Bremsscheibe vorzugsweise derart angeordnet, dass die Belüftungskanäle hin zur Hauptrotationsrichtung geneigt sind. die Hauptrotationsrichtung wird in der Regel durch die Vorwärtsfahrtrichtung des Fahrzeugs bestimmt.

Ein Ausführungsbeispiel der Erfindung wird anhand der nachfolgenden Figuren erläutert. Es zeigt:
- Figur 1: eine zweidimensionale Ansicht einer Stirnseite eines Ausführungsbeispiels einer Bremsscheibe mit eingezeichneter Schnittebene A-A,
- Figur 2: die Schnittansicht A-A des in Fig. 1 gezeigten Ausführungsbeispiels,
- Figur 3: eine dreidimensionale Ansicht des in Fig. 1 gezeigten Ausführungsbeispiels,
- Figur 4: eine zweidimensionale Ansicht einer Stirnseite der Innenscheibe des in Fig.1 gezeigten Ausführungsbeispiels,
- Figur 5: eine Seitenansicht der in Fig. 4 gezeigten Innenscheibe,
- Figur 6: eine dreidimensionale Ansicht der in Fig. 4 gezeigten Innenscheibe,
- Figur 7: eine zweidimensionale Ansicht einer Stirnseite einer Außenscheibe des in Fig.1 gezeigten Ausführungsbeispiels,
- Figur 8: eine dreidimensionale Ansicht der in Fig. 7 gezeigten Außenscheibe.

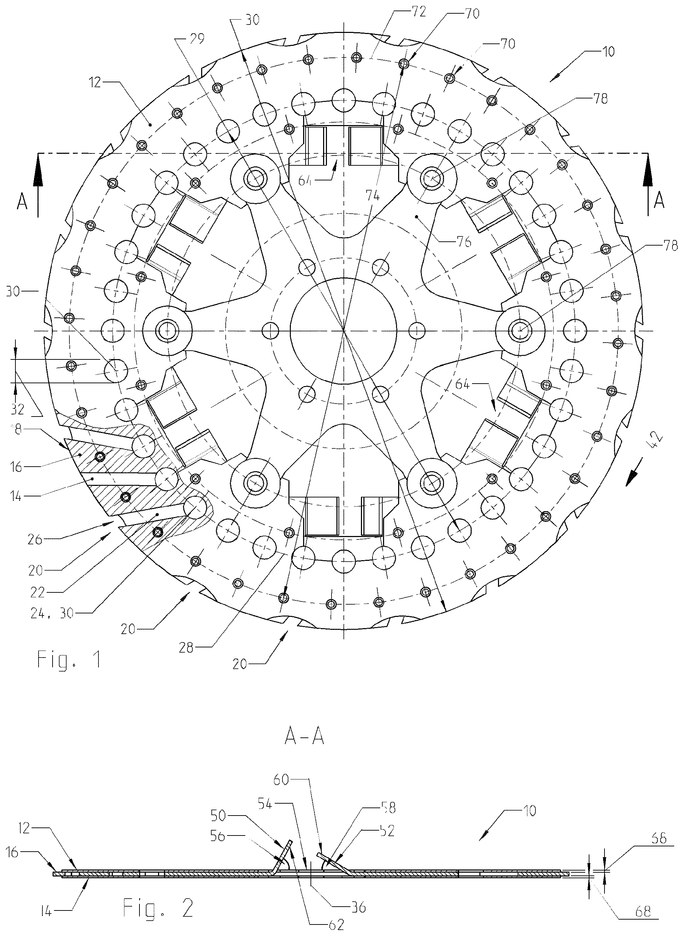

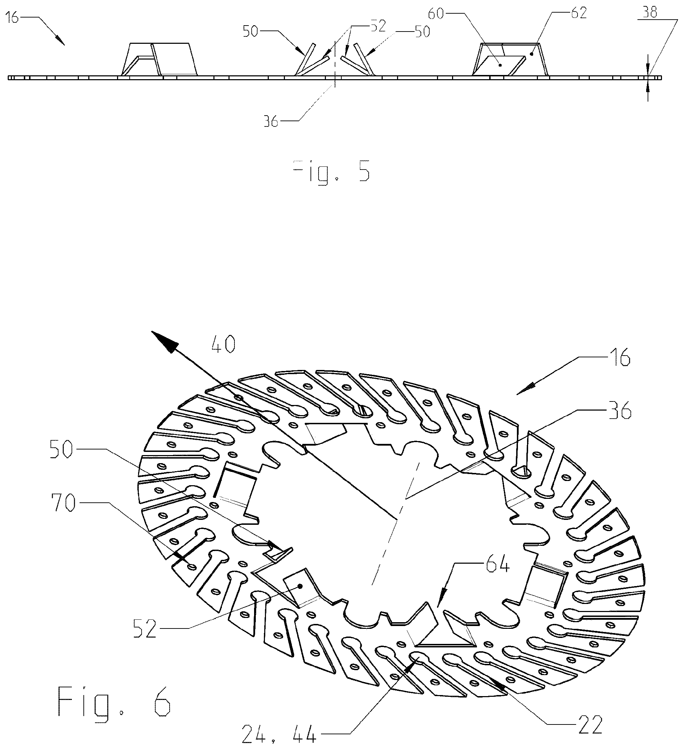

Die Figuren 1 bis 8 zeigen verschiedene Ansichten eines Ausführungsbeispiels. Der Übersichtlichkeit halber werden nicht alle Bezugszeichen in jeder Figur verwendet.

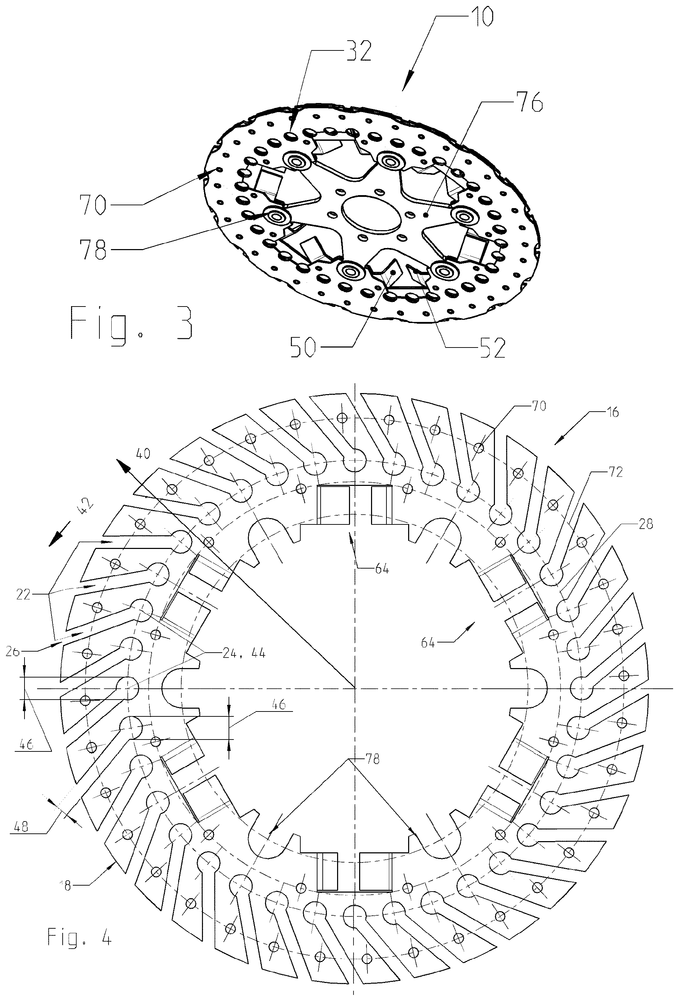

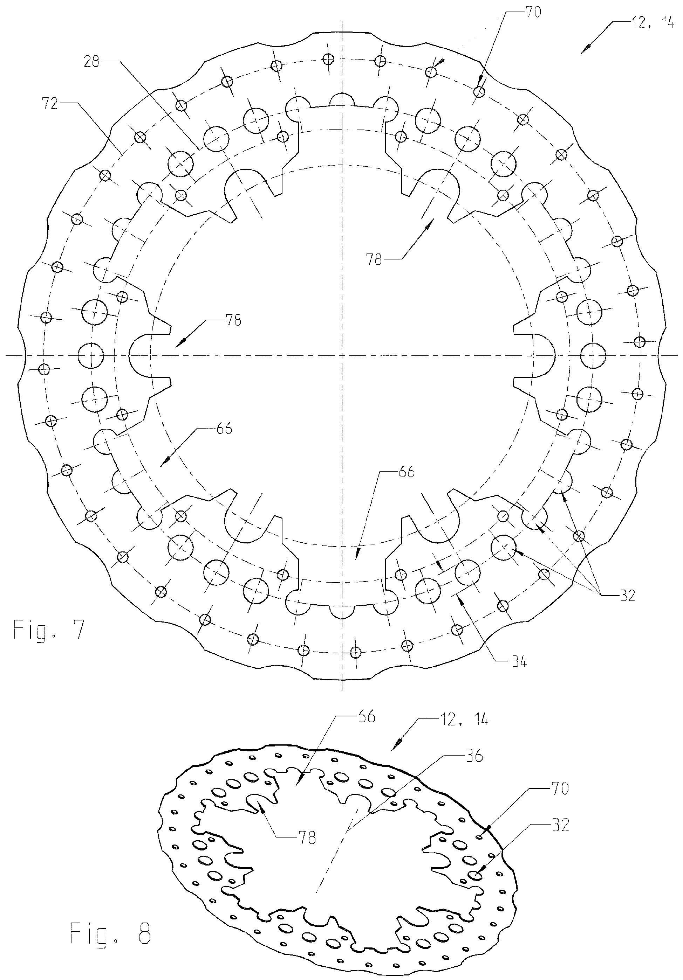

Fig. 1 zeigt ein Ausführungsbeispiel einer Bremsscheibe 10 für eine Scheibenbremse, vorzugsweise von Fahrrädern, mit einer ersten Außenscheibe 12 (siehe insbesondere Fig. 7 **u.** 8), einer vorzugsweise identischen zweiten Außenscheibe 14 und einer Innenscheibe 16 (siehe insbesondere Fig. 4 bis 6) mit einer Mantelfläche 18. Vorzugsweise weist die Bremsscheibe 10 außerdem mehrere, besonders bevorzugt 36, Luftdurchlässe 20 auf. Die Luftdurchlässe 20 sind bezüglich einer Rotationsachse 36 der Bremsscheibe 10 vorzugsweise rotatorisch gleichmäßig versetzt angeordnet. In den Figuren sind nur einzelne Luftdurchlässe 20 exemplarisch mit Bezugszeichen versehen. Jeder der Luftdurchlässe 20, umfasst einen in der Innenscheibe 16 angeordneten Belüftungskanal 22 mit einem inneren Kanalende 24 und einem äußeren Kanalende 26, wobei der Belüftungskanal 22 derart angeordnet ist, dass das äußere Kanalende 26 in der Mantelfläche 18 der Innenscheibe 16 angeordnet ist. Das innere Kanalende 24 ist auf einem gedachten ersten Teilkreis 28 der Bremsscheibe 10 angeordnet. Der erste Teilkreis 28 ist vorzugsweise konzentrisch zur Bremsscheibe 10 angeordnet und weist vorzugsweise einen ersten Teilkreisdurchmesser 29 auf, der kleiner ist als ein Außendurchmesser 30 der Bremsscheibe 10. Darüber hinaus umfasst vorzugsweise jeder der Luftdurchlässe 20 eine in der ersten Außenscheibe 12 und der zweiten Außenscheibe 14 angeordnete Belüftungsbohrung 32 mit einem Belüftungsbohrungsdurchmesser 34. Wie insbesondere in Fig. 2 dargestellt ist, ist die Innenscheibe 16 zwischen der ersten Außenscheibe 12 und der zweiten Außenscheibe 14 angeordnet. Dabei ist die Innenscheibe 16 derart zwischen der ersten Außenscheibe 12 und der zweiten Außenscheibe 14 angeordnet, dass die Belüftungsbohrung 32 eines jeden Luftdurchlasses 20 mit dem inneren Kanalende 24 desselben Luftdurchlasses 20 in Wirkverbindung steht (siehe Fig. 1).

Die Innenscheibe 16 ist in Fig. 1 insbesondere durch den Teilschnitt durch die erste Außenscheibe 12 erkennbar. Die in dem Teilschnitt angeordneten Belüftungskanäle 22 geben den Blick auf die zweite Außenscheibe 14 frei.

Vorzugsweise steht jede der Belüftungsbohrungen 32 derart in Wirkverbindung mit dem zugehörigen inneren Kanalende 24, dass Luft vom inneren Kanalende 24 in die Belüftungsbohrung 32 strömen kann. Die Belüftungsbohrungen 32 sind vorzugsweise als Durchgangsbohrung ausgebildet. Am äußeren Kanalende 26 einströmende Luft kann damit durch den Belüftungskanal 20 zum inneren Kanalende 24 und über die mindestens eine Belüftungsbohrung 32 wieder ins Freie strömen. Durch die Luftdurchlässe 20 kann somit ein Belüftungsstrom durch die Bremsscheibe 10 geleitet werden, der die in der Bremsscheibe 10 vorhandene Wärme abführen kann.

Besonders bevorzugt sind die Belüftungsbohrungen 32 auf dem ersten Teilkreis 28 angeordnet, sodass sie bei entsprechender Ausrichtung der Innenscheibe 16 zu der ersten Außenscheibe 12 und der zweiten Außenscheibe 14 mit dem inneren Kanalende 24 zusammenfällt. Die Längsachsen der Belüftungsbohrungen sind vorzugsweise parallel zu der in Fig. 2 gezeigten Rotationsachse 36 der Bremsscheibe 10 angeordnet.

Bevorzugt sind die erste Außenscheibe 12 und die zweite Außenscheibe 14 identisch ausgebildet. In Fig. 7 und 8 kann damit die erste Außenscheibe 12 oder die zweiten Außenscheibe 14 dargestellt sein. Besonders bevorzugt sind die erste Außenscheibe 12 und die zweiten Außenscheibe 14 spiegelsymmetrisch zueinander an der Bremsscheibe 10 angeordnet. Dadurch kann jedes der inneren Kanalenden 24 mit einer der Belüftungsbohrungen 32 der ersten Außenscheibe 12 und einer der Belüftungsbohrungen 32 der zweiten Außenscheibe 14 in Wirkverbindung stehen. Ein Teil der durch das äußere Kanalende 26 einströmenden Luft kann damit durch die entsprechende Belüftungsbohrung 32 der ersten Außenscheibe 12, der andere Teil durch die entsprechende Belüftungsbohrung 32 der zweiten Außenscheibe 14 ins Freie strömen.

Wie in den Fig. 4 bis 6 dargestellt, weist die Innenscheibe 16 vorzugsweise eine Innenscheibenstärke 38 auf, über die sich die Belüftungskanäle 22 vollständig erstrecken können. In Richtung der Rotationsachse 36 können die Belüftungskanäle 22 damit durch die erste Außenscheibe 12 und die zweite Außenscheibe 14 begrenzt werden.

Die Belüftungskanäle 22 können gegenüber einer radialen Richtung 40 der Innenscheibe 16 zumindest abschnittsweise geneigt sein. Die radiale Richtung der Innenscheibe bezieht sich vorzugsweise auf die Rotationsachse 36 der Bremsscheibe 10. Die Neigung erfolgt vorzugsweise hin einer vorgesehenen Hauptrotationsrichtung 42 der Bremsscheibe 10. So kann bei Rotation der Bremsscheibe 10 in der Hauptrotationsrichtung 42 das Einströmen von Luft in die Belüftungskanäle 22 durch die Rotationsbewegung aktiv unterstützt werden. Bevorzugt sind die Belüftungskanäle 22 linear ausgebildet.

Wie in Fig. 4 dargestellt, kann das innere Kanalende 24 durch eine Kanalendebohrung 44 mit einem Kanalendebohrungsdurchmesser 46 gebildet werden. Wie insbesondere aus Fig. 1 ersichtlich ist, kann die Innenscheibe 16 derart zwischen der ersten Außenscheibe 12 und der zweiten Außenscheibe 14 angeordnet sein, dass die Belüftungsbohrungen 32 und die Kanalendebohrungen 44 konzentrisch angeordnet sind. Besonders bevorzugt ist der Durchmesser der Belüftungsbohrungen 32 gleich groß wie der Kanalendebohrungsdurchmesser 46 ausgebildet.

Der Kanalendebohrungsdurchmesser 46 kann größer als eine Kanalabschnittsbreite 48 eines unmittelbar an die Kanalendebohrung 44 angrenzenden Kanalabschnitts ausgebildet sein (siehe insbesondere Fig. 4). Dadurch kann das innere Kanalende 24 gegenüber dem übrigen Belüftungskanal aufgeweitet sein. Vorzugsweise weisen die Belüftungskanäle 22 im Übrigen eine konstante Kanalbreite auf.

Wie insbesondere aus Fig. 2 erkennbar ist, kann die Bremsscheibe 10 kann einen ersten Lüfterflügel 50 und einen zweiten Lüfterflügel 52 aufweisen. Der erste Lüfterflügel 52 kann mit einer Stirnfläche 54 der Bremsscheibe 10 einen ersten Flügelwinkel 56 einschließen. Der zweite Lüfterflügel 52 kann mit der Stirnfläche 54 der Bremsscheibe 10 einen zweiten Flügelwinkel 58 einschließen. Vorzugsweise sind der erste Flügelwinkel 56 und der zweite Flügelwinkel 58 jeweils kleiner als 90° ausgebildet. Damit können die Lüfterflügel 50, 52 bzgl. der Rotationsachse 36 der Bremsscheibe 10 in axialer Richtung von der Bremsscheibe 10 abstehen. Der erste Lüfterflügel 50 und der zweite Lüfterflügel 52 sind bevorzugt in dieselbe axiale Richtung der Bremsscheibe 10 ausgestellt. Besonders bevorzugt ist der zweite Flügelwinkel 58 betragsmäßig kleiner als der erste Flügelwinkel 56 ausgebildet.

Der erste Lüfterflügel 50 und der zweite Lüfterflügel 52 können einstückig mit der Innenscheibe 16 verbunden sein (siehe Fig. 2). Insbesondere können die Lüfterflügel 50, 52 durch ein aus der Innenscheibe 16 herausgebogenes Element gebildet sein.

Bevorzugt sind der erste Lüfterflügel 50 und der zweite Lüfterflügel 52 derart einander gegenüberliegend angeordnet, dass an den zweiten Lüfterflügel 52 anströmende Luft auf den ersten Lüfterflügel 50 gelenkt wird. Dabei ist vorzugsweise der zweite Lüfterflügel 52 in der Hauptrotationsrichtung 42 der Bremsscheibe 10 vor dem ersten Lüfterflügel 50 angeordnet. Insbesondere bei einer Rotation der Bremsscheibe 10 in der Hauptrotationsrichtung 42 kann an einer Oberseite 60 des zweiten Lüfterflügels 52 anströmende Luft auf eine Unterseite 62 des ersten Lüfterflügels 50 gelenkt werden. Als Oberseite 60 wird dabei vorzugsweise die Seite des ersten Lüfterflügels 50 bezeichnet, zu der der erste Lüfterflügel 50 ausgestellt ist.

Wie insbesondere in den Fig. 2 u. 4 bis 6 dargestellt, sind der erste Lüfterflügel 50 und der zweite Lüfterflügel 52 vorzugsweise an der Innenscheibe 16 angeordnet. Der erste Lüfterflügel 50 und der zweite Lüfterflügel 52 können ein Flügelpaar 64 bilden. Die Innenscheibe 16 weist vorzugsweise sechs rotatorisch gleichmäßig versetzte Flügelpaare 64 auf. Vorzugsweise sind die Flügelpaare 64 innerhalb des ersten Teilkreises 28 angeordnet, besonders bevorzugt am Innenumfang der Bremsscheibe 10. Die erste Außenscheibe 12 und die zweite Außenscheibe 14 können eine Aussparung 66 aufweisen, in der der mindestens eine Lüfterflügel angeordnet ist (siehe Fig. 7 u. 8).

Vorzugsweise ist die Innenscheibe 16 aus einem Kupferwerkstoff, insbesondere aus Kupfer, gefertigt. Aufgrund der hohen Wärmeleitfähigkeit von Kupfer, kann die Bremsscheibe 10 die eingetragene Wärme besonders schnell abführen. In Kombination mit den an der Innenscheibe 16 angeordneten Belüftungskanälen 22 und den an der Innenscheibe 16 angeordneten Lüfterflügeln 50, 52 kann der wärmeabführende Effekt weiter gesteigert werden. Die erste Außenscheibe 12 und die zweite Außenscheibe 14 können aus Edelstahl mit einem Ferritanteil ausgebildet sein. Insbesondere der Ferritanteil kann den Reibwert der Bremsscheibe 10 deutlich erhöhen, sodass eine besonders gute Bremswirkung erreicht werden kann.

Die Innenscheibenstärke 38 der Innenscheibe 16 beträgt vorzugsweise 0,8 mm bis 1 mm. Die erste Außenscheibe 12 und die zweite Außenscheibe 14 weisen jeweils eine Außenscheibenstärke 68 von 0,5 mm bis 0,7 mm auf (siehe Fig. 2).

Wie unter anderem in Fig. 1 gezeigt, weist die Bremsscheibe 10 vorzugsweise Befestigungsbohrungen 70 auf. Jede der Befestigungsbohrungen 70 kann jeweils zwischen zwei Belüftungskanälen 22 angeordnet sein. Eine Bremsscheibe 10 mit 36 Belüftungskanälen weist damit vorzugsweise 36 Befestigungsbohrungen 70 auf. Die Befestigungsbohrungen 70 sind bevorzugt auf einem gedachten zweiten Teilkreis 72 der Bremsscheibe 10 mit einem zweiten Teilkreisdurchmesser 74 angeordnet, wobei der zweite Teilkreisdurchmesser 74 besonders bevorzugt größer als der erste Teilkreisdurchmesser 29 ist. Vorzugsweise sind die Befestigungsbohrungen 70 als Durchgangsbohrung durch die Außenscheiben 12, 14 und die Innenscheibe 16 ausgebildet. So können die Außenscheiben 12, 14 und die Innenscheibe 16 mittels der Befestigungsbohrungen 70 miteinander verbunden werden.

Wie insbesondere in Fig. 1 u. 3 dargestellt ist, können die Innenscheibe 16 und die Außenscheiben 12, 14 kreisringförmig ausgebildet sein und gegenüber einem Lagerelement 76 schwimmend gelagert sein. Vorzugsweise weist die Bremsscheibe 10 sechs Lagerstellen 78 auf, die vorzugsweise am Innenumfang der Bremsscheibe 10, insbesondere im Wechsel mit den Flügelpaaren 64 angeordnet sind. Besonders bevorzugt sind die Lagerstellen 78 an den Außenscheiben 12, 14 und an der Innenscheibe 16 angeordnet. Das Lagerelement 76 ist vorzugsweise sternförmig ausgebildet.

Ein nicht erfindungsgemäßes Verfahren zur Herstellung der Bremsscheibe 10 kann sich dadurch auszeichnen, dass die Innenscheibe 16 und die Außenscheiben 12, 14 zumindest teilweise mittels Laserschneiden herstellt werden. Damit können die Außenscheiben 12, 14 und die Innenscheibe 16 unkompliziert aus einer Metallplatte ausgeschnitten werden. Insbesondere können die Flügelpaare 64 durch einen einfachen T-Schnitt aus der Innenscheibe 16 herausgeschnitten werden, wobei der Längsstrich des T vorzugsweise die einander gegenüberliegenden Kanten des ersten Lüfterflügels 50 und des zweiten Lüfterflügels 52 definiert.

### Bezugszeichenliste

- 10: Bremsscheibe
- 12: ersten Außenscheibe
- 14: zweite Außenscheibe
- 16: Innenscheibe
- 18: Mantelfläche
- 20: Luftdurchlass
- 22: Belüftungskanal
- 24: inneres Kanalende
- 26: äußeres Kanalende
- 28: erster Teilkreis
- 29: erster Teilkreisdurchmesser
- 30: Außendurchmesser der Bremsscheibe
- 32: Belüftungsbohrung
- 34: Belüftungsbohrungsdurchmesser
- 36: Rotationsachse
- 38: Innenscheibenstärke
- 40: radiale Richtung
- 42: Hauptrotationsrichtung
- 44: Kanalendebohrung
- 46: Kanalendebohrungsdurchmesser
- 48: Kanalabschnittsbreite
- 50: erster Lüfterflügel
- 52: zweiter Lüfterflügel
- 54: Stirnfläche der Bremsscheibe
- 56: erster Flügelwinkel
- 58: zweiter Flügelwinkel
- 60: Oberseite des zweiten Lüfterflügels
- 62: Unterseite des ersten Lüfterflügels
- 64: Flügelpaar
- 66: Aussparung
- 68: Außenscheibenstärke
- 70: Befestigungsbohrung
- 72: zweiter Teilkreis
- 74: zweiter Teilkreisdurchmesser
- 76: Lagerelement
- 78: Lagerstelle

## Patentansprüche

1. Bremsscheibe (10) für eine Scheibenbremse, vorzugsweise von Fahrrädern, mit folgenden Merkmalen:
• einer ersten Außenscheibe (12),
• einer zweiten Außenscheibe (14),
• einer Innenscheibe (16) mit einer Mantelfläche (18), und
• mindestens einem Luftdurchlass (20), umfassend
o einen in der Innenscheibe (16) angeordneten Belüftungskanal (22) mit einem inneren Kanalende (24) und einem äußeren Kanalende (26), wobei der Belüftungskanal (22) derart angeordnet ist, dass das äußere Kanalende (26) in der Mantelfläche (18) der Innenscheibe (16) angeordnet ist und das innere Kanalende (24) auf einem einen ersten Teilkreisdurchmesser (29) aufweisenden gedachten ersten Teilkreis (28) der Bremsscheibe (10) angeordnet ist,
o eine in der ersten Außenscheibe (12) und/oder der zweiten Außenscheibe (14) angeordnete Belüftungsbohrung (32) mit einem Belüftungsbohrungsdurchmesser (34),
• wobei die Innenscheibe (16) derart zwischen der ersten Außenscheibe (12) und der zweiten Außenscheibe (14) angeordnet ist, dass die mindestens eine Belüftungsbohrung (32) mit dem inneren Kanalende (24) in Wirkverbindung steht,
**dadurch gekennzeichnet, dass**
die Bremsscheibe (10) mindestens einen Lüfterflügel (50, 52) aufweist, der mit einer Stirnfläche (54) der Bremsscheibe (10) einen Flügelwinkel (56, 58) von kleiner/gleich 90° einschließt, wobei der mindestens eine Lüfterflügel (50, 52) an der Innenscheibe (16) angeordnet ist.

2. Bremsscheibe nach Anspruch 1,
**dadurch gekennzeichnet, dass** der mindestens eine Belüftungskanal (32) gegenüber der radialen Richtung (40) der Innenscheibe (16) zumindest abschnittsweise geneigt ist.

3. Bremsscheibe nach einem der vorhergehenden Ansprüche, **dadurch gekennzeichnet, dass** das innere Kanalende (24) durch eine Kanalendebohrung (44) mit einem Kanalendebohrungsdurchmesser (46) gebildet wird, und die Innenscheibe (16) derart zwischen der ersten Außenscheibe (12) und der zweiten Außenscheibe (14) angeordnet ist, dass die mindestens eine Belüftungsbohrung (32) und die Kanalendebohrung (44) konzentrisch angeordnet sind.

4. Bremsscheibe nach Anspruch 3,
**dadurch gekennzeichnet, dass** der Kanalendebohrungsdurchmesser (46) größer ist als eine Kanalabschnittsbreite (48) eines unmittelbar an die Kanalendebohrung (44) angrenzenden Kanalabschnitts.

5. Bremsscheibe nach einem der vorhergehenden Ansprüche, **dadurch gekennzeichnet, dass** die Bremsscheibe (10) mehrere, vorzugsweise 36, rotatorisch gleichmäßig versetzte Luftdurchlässe (20) aufweist.

6. Bremsscheibe nach einem der vorhergehenden Ansprüche, **dadurch gekennzeichnet, dass** die Bremsscheibe (10) einen ersten Lüfterflügel (50) und einen zweiten Lüfterflügel (52) aufweist, wobei der erste Lüfterflügel (50) mit der Stirnfläche (54) der Bremsscheibe (10) einen ersten Flügelwinkel (56) einschließt und der zweite Lüfterflügel (52) mit der Stirnfläche (54) der Bremsscheibe (10) einen zweiten Flügelwinkel (58) einschließt, und wobei der zweite Flügelwinkel (58) betragsmäßig kleiner oder gleich dem ersten Flügelwinkel (56) ist.

7. Bremsscheibe nach Anspruch 6,
**dadurch gekennzeichnet, dass** der erste Lüfterflügel (50) und der zweite Lüfterflügel (52) derart einander gegenüberliegend angeordnet sind, dass an den zweiten Lüfterflügel (52) anströmende Luft auf den ersten Lüfterflügel (50) gelenkt wird.

8. Bremsscheibe nach einem der Ansprüche 6 bis 7,
**dadurch gekennzeichnet, dass** der erste Lüfterflügel (50) und der zweite Lüfterflügel (52) ein Flügelpaar (64) bilden und die Innenscheibe (16) mehrere, vorzugsweise sechs, rotatorisch gleichmäßig versetzte Flügelpaare (64) aufweist.

9. Bremsscheibe nach einem der vorhergehenden Ansprüche, **dadurch gekennzeichnet, dass** die Innenscheibe (16) aus einem Kupferwerkstoff, insbesondere aus Kupfer, gefertigt ist.

10. Bremsscheibe nach einem der vorhergehenden Ansprüche, **dadurch gekennzeichnet, dass** die erste Außenscheibe (12) und/oder die zweite Außenscheibe (14) aus Edelstahl mit einem Ferritanteil ausgebildet ist.

11. Bremsscheibe nach einem der vorhergehenden Ansprüche, **dadurch gekennzeichnet, dass** die Innenscheibe (16) eine Innenscheibenstärke (38) von 0,8 mm bis 1 mm aufweist und die erste Außenscheibe (12) und die zweite Außenscheibe (14) jeweils eine Außenscheibenstärke (68) von 0,5 mm bis 0,7 mm aufweisen.

12. Bremsscheibe nach einem der vorhergehenden Ansprüche, **dadurch gekennzeichnet, dass** die Bremsscheibe (10) mindestens eine Befestigungsbohrung (70) aufweist, die auf einem einen zweiten Teilkreisdurchmesser (74) aufweisenden gedachten zweiten Teilkreis (72) der Bremsscheibe (10) angeordnet ist, wobei der zweite Teilkreisdurchmesser (74) größer als der erste Teilkreisdurchmesser (29) ist.

13. Bremsscheibe nach einem der vorhergehenden Ansprüche, **dadurch gekennzeichnet, dass** die Innenscheibe (16) und die Außenscheiben (12, 14) kreisringförmig ausgebildet sind und gegenüber einem Lagerelement (76) schwimmend gelagert sind.

14. Scheibenbremse mit einer Bremsscheibe (10) nach einem der vorhergehenden Ansprüche.

15. Fahrzeug, insbesondere Fahrrad, mit einer Bremsscheibe (10) nach einem der Ansprüche 1 bis 13.

## Claims

1. Brake disc (10) for a disc brake, preferably for bicycles, comprising the following features:
• a first outer disc (12),
• a second outer disc (14),
• an inner disc (16) with a surface (18), and
• at least one air passage (20), comprising
∘ a ventilation channel (22) arranged in the inner disc (16) with an inner channel end (24) and an outer channel end (26), wherein the ventilation channel (22) is arranged such that the outer channel end (26) is arranged in the outer surface (18) of the inner disc (16) and the inner channel end (24) is arranged on an imaginary first pitch circle (28) of the brake disc (10) having a first pitch circle diameter (29),
∘ a ventilation bore (32) arranged in the first outer disc (12) and/or the second outer disc (14) with a ventilation bore diameter (34),
• wherein the inner disc (16) is arranged between the first outer disc (12) and the second outer disc (14) in such a way that the at least one ventilation bore (32) is in operative connection with the inner channel end (24),
**characterized in that**
the brake disc (10) comprises at least one fan blade (50, 52) which, with an end face (54) of the brake disc (10), encloses a blade angle (56, 58) of less than or equal to 90°, wherein the at least one fan blade (50, 52) is arranged on the inner disc (16).

2. Brake disc according to claim 1,
**characterized in that**
the at least one ventilation channel (32) is inclined at least in sections relative to the radial direction (40) of the inner disc (16).

3. Brake disc according to any one of the preceding claims, **characterized in that**
the inner channel end (24) is formed by a channel end bore (44) with a channel end bore diameter (46), and the inner disc (16) is arranged between the first outer disc (12) and the second outer disc (14) in such a way that the at least one ventilation bore (32) and the channel end bore (44) are arranged concentrically.

4. Brake disc according to claim 3,
**characterized in that**
the channel end bore diameter (46) is larger than a channel section width (48) of a channel section immediately adjacent to the channel end bore (44).

5. Brake disc according to any one of the preceding claims, **characterized in that**
the brake disc (10) comprises a plurality, preferably 36, of air passages (20) that are rotatably evenly spaced.

6. Brake disc according to any one of the preceding claims, **characterized in that**
the brake disc (10) comprises a first fan blade (50) and a second fan blade (52), wherein the first fan blade (50) forms a first blade angle (54) with the end face (54) of the brake disc (10) (56) with the end face (54) of the brake disc (10), and the second fan blade (52) forms a second blade angle (58) with the end face (54) of the brake disc (10), and wherein the second blade angle (58) is smaller than or equal to the first blade angle (56).

7. Brake disc according to claim 6,
**characterized in that**
the first fan blade (50) and the second fan blade (52) are arranged opposite each other in such a way that air flowing onto the second fan blade (52) is directed onto the first fan blade (50).

8. Brake disc according to any one of claims 6 to 7, **characterized in that**
the first fan blade (50) and the second fan blade (52) form a pair of blades (64) and the inner disc (16) has several, preferably six, pairs of blades (64) that are evenly spaced in a rotational direction.

9. Brake disc according to any one of the preceding claims, **characterized in that**
the inner disc (16) is made of a copper material, in particular copper.

10. Brake disc according to any one of the preceding claims, **characterized in that**
the first outer disc (12) and/or the second outer disc (14) is made of stainless steel with a ferrite content.

11. Brake disc according to any one of the preceding claims, **characterized in that**
the inner disc (16) has an inner disc thickness (38) of 0.8 mm to 1 mm, and the first outer disc (12) and the second outer disc (14) each have an outer disc thickness (68) of 0.5 mm to 0.7 mm.

12. Brake disc according to any one of the preceding claims, **characterized in that**
the brake disc (10) comprises at least one mounting hole (70) which is arranged on an imaginary second pitch circle (72) of the brake disc (10) having a second pitch circle diameter (74), wherein the second pitch circle diameter (74) is larger than the first pitch circle diameter (29).

13. Brake disc according to any one of the preceding claims, **characterized in that**
the inner disc (16) and the outer discs (12, 14) are circular in shape and are mounted in a floating manner relative to a bearing element (76).

14. Disc brake with a brake disc (10) according to any one of the preceding claims.

15. Vehicle, in particular a bicycle, with a brake disc (10) according to any one of claims 1 to 13.

## Revendications

1. Disque (10) de frein pour un frein à disque, de préférence de bicyclette, comprenant les caractéristiques suivantes :
• un premier disque (12) extérieur,
• un deuxième disque (14) extérieur,
• un disque (16) intérieur ayant une surface (18) latérale et
• au moins un passage (20) pour de l'air, comprenant
∘ un conduit (22) de ventilation disposé dans le disque (16) intérieur et ayant une extrémité (24) intérieure de conduit et une extrémité (26) extérieure de conduit, dans lequel le conduit (22) de ventilation est disposé de manière à ce que l'extrémité (26) extérieure du conduit soit disposée dans la surface (18) latérale du disque (16) intérieur et de manière à ce que l'extrémité (24) intérieure du conduit soit disposée sur un premier cercle (28) gradué imaginaire, ayant un premier diamètre (29) de cercle gradué, du disque (10) de frein,
∘ un trou (32) de ventilation disposé dans le premier disque (12) extérieur et/ou dans le deuxième disque (14) extérieur et ayant un diamètre (34) de trou d'aération,
• dans lequel le disque (16) intérieur est disposé entre le premier disque (12) extérieur et le deuxième disque (14) extérieur de manière à ce que le au moins un trou (32) de ventilation soit en liaison d'action avec l'extrémité (24) intérieure du conduit,
**caractérisé en ce que**
le disque (10) de frein a au moins une ailette (50, 52) de ventilateur, qui fait avec une surface (54) frontale du disque (10) de frein un angle (56, 58) d'ailette inférieur/égal à 90°, dans lequel la au moins une ailette (50, 52) de ventilateur est disposée sur le disque (16) intérieur.

2. Disque de frein suivant la revendication 1,
**caractérisé en ce qu'**au moins un canal (32) de ventilation est incliné au moins par tronçon par rapport à la direction (40) radiale du disque (16) intérieur.

3. Disque de frein suivant l'une des revendications précédentes,
**caractérisé en ce que** l'extrémité (24) intérieure du conduit est formée par un trou (44) d'extrémité de conduit ayant un diamètre (46) de trou d'extrémité de conduit et le disque (16) intérieur est disposé entre le premier disque (12) extérieur et le deuxième disque (14) extérieur de manière à ce que le au moins un trou (32) de ventilation et le trou (44) d'extrémité du conduit soient disposés de manière concentrique.

4. Disque de frein suivant la revendication 3,
**caractérisé en ce que** le diamètre (46) du trou d'extrémité du conduit est plus grand qu'une largeur (48) d'un tronçon du conduit voisin directement du trou (44) d'extrémité du conduit.

5. Disque de frein suivant l'une des revendications précédentes,
**caractérisé en ce que** le disque (10) de frein a plusieurs, de préférence 36, passages (20) pour de l'air uniformément décalé en rotation.

6. Disque de frein suivant l'une des revendications précédentes,
**caractérisé en ce que** le disque (10) de frein a une première ailette (50) de ventilateur et une deuxième ailette (52) de ventilateur, dans lequel la première ailette (50) de ventilateur fait avec la surface (54) frontale du disque (10) de frein un premier angle (56) d'ailette et la deuxième ailette (52) de ventilateur fait avec la surface (54) frontale du disque (10) de frein un deuxième angle (58) d'ailette et dans lequel le deuxième angle (58) d'ailette est en valeur absolue inférieur ou égal au premier angle (56) d'ailette.

7. Disque de frein suivant la revendication 6,
**caractérisé en ce que** la première ailette (50) du ventilateur et la deuxième ailette (52) du ventilateur sont disposées en étant opposées l'une à l'autre de manière à ce que de l'air affluent sur la deuxième ailette (52) du ventilateur soit dévié sur la première ailette (50) du ventilateur.

8. Disque de frein suivant l'une des revendications 6 à 7, **caractérisé en ce que** la première ailette (50) du ventilateur et la deuxième ailette (52) du ventilateur forment une paire (64) d'ailettes et le disque (16) intérieur a plusieurs, de préférence six, paires (64) d'ailettes uniformément décalées en rotation.

9. Disque de frein suivant l'une des revendications précédentes,
**caractérisé en ce que** le disque (16) intérieur étant un matériau de cuivre, en particulier en cuivre.

10. Disque de frein suivant l'une des revendications précédentes,
**caractérisé en ce que** le premier disque (12) extérieur et/ou le deuxième disque (14) extérieur sont en acier fin ayant une proportion de ferrite.

11. Disque de frein suivant l'une des revendications précédentes,
**caractérisé en ce que** le disque (16) intérieur a un diamètre (38) de disque intérieur de 0,8 mm à 1 mm et le premier disque (12) extérieur et le deuxième disque (14) extérieur ont chacun une épaisseur (68) de disque extérieur de 0,5 mm à 0,7 mm.

12. Disque de frein suivant l'une des revendications précédentes,
**caractérisé en ce que** le disque (10) de frein a au moins un trou (70) de fixation qui est disposé sur un deuxième cercle (72) gradué imaginaire, ayant un deuxième diamètre (74) de cercle gradué, du disque (10) de frein, dans lequel le deuxième diamètre (74) de cercle gradué est plus grand que le premier diamètre (29) de cercle gradué.

13. Disque de frein suivant l'une des revendications précédentes,
**caractérisé en ce que** le disque (16) intérieur et les disques (12, 14) extérieurs sont en forme d'anneaux de cercle et sont montés flottant par rapport à un élément (76) de palier.

14. Frein à disque comprenant un disque (10) de frein suivant l'une des revendications précédentes.

15. Véhicule, en particulier bicyclette, comprenant un frein (10) à disque suivant l'une des revendications 1 à 13.
